# DEMANDE DE BREVET EUROPEEN

(11) **EP 2 239 081 A1**
(43) Date de publication de la demande: **13.10.2010**
(21) Numéro de dépôt: 10158783.0
(22) Date de dépôt: 31.03.2010
(51) Int. Cl.: B23K 9/32

(54) **Faisceau pour relier un poste de soudage et un bec de cygne MIG/MAG refroidi à l'eau**

(30) Priorité: 09.04.2009 FR 0952313
(71) Demandeur: Torche Service SA, 57350 Stiring Wendel (FR)
(72) Inventeur: Stoeffler, Claude Henri Nicolas Edouard, 57200 Sarreguemines (FR)
(74) Mandataire: Vièl, Frédérique

(57) **Abrégé**

L'invention concerne un faisceau (110) pour relier un poste de soudage associé à un réservoir d'eau (170) et un bec de cygne MIG ou MAG à refroidissement à l'eau, comprenant une conduite d'alimentation en eau (111), une conduite de retour d'eau (114), un câble d'alimentation électrique (112), un câble pour le transport du fil de soudage (112) et une conduite pour le gaz (112).

L'inconvénient majeur de ces faisceaux réside dans le fait que la conduite de retour d'eau et le câble d'alimentation électrique sont combinés dans un seul câble mixte. Or ce câble mixte résiste mal aux contraintes de soudage de sorte qu'il se produit souvent une fuite d'eau au niveau du raccord de ce câble mixte au bec de cygne.

Dans le faisceau de l'invention, les conduites d'alimentation (111) et de retour d'eau (114) sont séparées du câble d'alimentation en électricité, du câble pour le transport du fil de soudage et de la conduite pour le gaz.

## Description

L'invention concerne un faisceau et un bec de cygne pour soudage de type MIG MAG selon le préambule de la revendication 1 et de la revendication 7 respectivement.

De tels faisceaux servent à relier le poste de soudage associé à un réservoir d'eau de refroidissement au bec de cygne MIG ou MAG. En général, ils contiennent également deux fils électriques pour la commande de la torche. Tous ces câbles sont maintenus ensemble par une gaine. Dans la pratique, la conduite pour le retour de l'eau et le câble électrique sont associés dans un même câble. Ainsi, la conduite d'eau contient une tresse en cuivre. De tels faisceaux sont connus par exemple du document DE 10 2007 014 605 A1. Les deux extrémités de ce câble mixte sont munies chacune d'une prise filetée pour les visser d'une part sur le bec de cygne et d'autre part sur le poste de soudage.

La première extrémité de ces câbles ou conduites est fixée au col de cygne de la torche et l'autre extrémité à un socle, dit socle arrière, qui est lui-même raccordé au poste de soudage. Seule l'extrémité de la conduite d'alimentation en eau n'est pas reliée au socle arrière. Cette conduite en provenance du réservoir rejoint le reste du faisceau juste après le socle arrière. Le retour d'eau, combiné avec le courant électrique dans un câble commun, doit être séparé dans le socle arrière et sortir du socle arrière par un tuyau qui retourne vers le réservoir. Par conséquent, le socle arrière a cinq connexions (sortie gaz, sortie fil de soudage, sortie courant / entrée retour d'eau, sortie retour d'eau, fils de commande). Au niveau du bec de cygne de la torche, on a également cinq connexions (entrée gaz, entrée fil de soudage, entrée courant / sortie retour d'eau, entrée eau, câbles de commande). Ici aussi, il faut une chambre de mélange au niveau du raccord entrée courant / sortie retour d'eau.

Un problème récurrent avec les systèmes de soudage refroidis à l'eau réside dans le fait que les soudeurs négligent souvent de contrôler le niveau d'eau dans le refroidisseur. Or un niveau d'eau insuffisant entraîne la destruction des faisceaux et des becs de cygne.

Le bec de cygne de la torche se prolonge, côté faisceau, par une poignée. Or, la fixation du câble mixte électricité / retour d'eau dépasse plus du bec de cygne que les autres fixations de sorte que cette fixation se trouve plus près de l'extrémité libre de la poignée. Lors de la soudure, le faisceau est soumis à de nombreuses torsions dans tous les sens. Or, ces torsions se font directement derrière la poignée. La fixation du câble mixte électricité / retour d'eau est donc soumise à de nombreuses contraintes qui peuvent provoquer un endommagement du câble mixte et une fuite d'eau. L'eau ne retournant pas dans le réservoir, le câble électrique n'est plus refroidi. De plus, l'eau ne circulant plus, il n'y a plus de refroidissement du bec de cygne ou des autres composants du faisceau. Il en résulte dans le meilleur des cas une destruction du câble mixte électricité / retour d'eau, dans les autres cas la destruction complète de la torche. Le remplacement du câble mixte électricité / retour d'eau nécessite le démontage de la gaine, le dévissage du câble mixte, opération rendue difficile par l'encombrement au niveau des connexions sur le socle arrière et sur le bec de cygne de la torche. Il faut compter plus d'une heure et demie de travail. De plus, ce câble mixte est relativement coûteux. Cependant, lorsqu'un faisceau est endommagé en raison notamment d'une surchauffe suite à un défaut de circulation de l'eau, les opérateurs préfèrent souvent jeter tout le faisceau avec le bec de cygne plutôt que de perdre du temps à les réparer ou à remplacer l'un ou l'autre de ces constituants.

Lors d'une surchauffe du câble mixte électricité / retour d'eau, il peut arriver que la bague reliant la conduite à l'embout de fixation recule malgré la colle et son sertissage. Le risque de fuite d'eau est donc accru.

L'objectif de l'invention est de développer un faisceau et un bec de cygne qui ne présentent pas les inconvénients des faisceaux et des becs de cygne de l'état de la technique. Notamment, le risque de fuite devra être diminué et le raccord des conduites d'eau devra être simplifié pour faciliter leur remplacement. Un autre objectif de l'invention est d'améliorer la résistance du bec de cygne à un dysfonctionnement de la circulation d'eau. Un troisième objectif de l'invention est d'obtenir un faisceau au moins aussi souple et flexible, si ce n'est plus, que celui de l'art antérieur. Un quatrième objectif est de diminuer le temps de réparation du faisceau pour qu'il devienne à nouveau plus rentable de réparer que de jeter le faisceau avec le bec de cygne. Un cinquième objectif est d'augmenter la durée de vie du faisceau et du bec de cygne de plusieurs fois.

Cet objectif est atteint conformément à l'invention du fait que les conduites d'alimentation et de retour d'eau sont séparées du câble d'alimentation en électricité, du câble pour le transport du fil de soudage et de la conduite pour le gaz.

Cet objectif est également atteint avec le bec de cygne selon l'invention destiné à être raccordé à un faisceau conforme à l'invention. Ce bec de cygne comprend un raccord pour la conduite d'arrivée d'eau, un raccord pour la conduite de retour d'eau, un raccord pour la conduite de gaz, un raccord pour l'entrée du fil de soudage, une entrée pour le gaz de soudage et une prise pour le câble électrique, les raccords pour les conduites d'eau étant distincts du raccord pour la conduite de gaz, de l'entrée du fil de soudage et de la prise pour le câble électrique.

Ainsi, en séparant la conduite de retour d'eau du câble d'alimentation électrique, il est possible de fixer les extrémités de la conduite de retour d'eau par un simple collier. Il n'est plus nécessaire de visser les extrémités de la conduite, ce qui simplifie grandement son remplacement.

De plus, le raccord pour la conduite de retour d'eau au niveau du bec de cygne peut être rapproché du bec de cygne de sorte qu'il ne dépasse plus vers l'arrière comme le faisait le raccord électricité / retour d'eau de l'état de la technique. Dans ces conditions, les flexions du faisceau à l'extrémité de la poignée se font à une distance suffisamment grande du raccord pour ne pas risquer d'endommager la conduite de retour d'eau au niveau de celui-ci.

En outre, si pour remédier à l'absence de refroidissement il est préférable d'augmenter la section du câble électrique par rapport à celui du faisceau de l'état de la technique, par contre le diamètre de la conduite de retour d'eau est plus faible puisqu'elle n'a plus à recevoir le câble électrique. Ainsi, la perte de flexibilité due au câble électrique de plus grande section est en grande partie compensée par une plus grande flexibilité de la conduite de retour d'eau. Le faisceau conforme à l'invention n'est donc qu'à peine moins flexible que le faisceau de l'état de la technique.

L'utilisation d'un câble électrique de plus grande section protège également le col de cygne en cas d'absence de refroidissement par l'eau. Alors que le bec de cygne et le faisceau d'une torche traditionnelle sont détruits en une à deux minutes en cas d'absence de circulation d'eau, le bec de cygne et le faisceau de la torche conforme à l'invention résistent à l'absence de circulation d'eau, comme le fait une torche refroidie à l'air.

Par ailleurs, la conduite de retour de l'eau, tout comme celle d'alimentation en eau, n'a plus besoin de transiter par le socle arrière puisqu'il n'est plus nécessaire de sortir la tresse électrique de la conduite. En pratique, cela veut dire qu'il est possible, de faire sortir les conduites d'eau du faisceau avant le socle arrière pour les raccorder directement au réservoir d'eau.

Enfin, dans le faisceau de l'invention, l'eau ne circule que dans le bec de cygne, l'eau ne subit donc pas, contrairement aux faisceaux de l'état de la technique, l'échauffement supplémentaire dû au refroidissement du câble électrique.

Conformément à l'invention, il est préférable que le faisceau comprenne en outre deux fils pour la commande électrique de la torche. De même, il est judicieux de placer tous les éléments constituant le faisceau à l'intérieur d'une gaine qui les recouvre sur une partie au moins de la longueur du faisceau. Ainsi, la gaine pourra s'étendre d'un bout à l'autre du faisceau, ne laissant dépasser que la quantité des différents constituants du faisceau nécessaire pour leur raccordement au bec de cygne d'un côté et au socle arrière de l'autre. Du côté du socle arrière, les conduites d'eau pourront sortir de la gaine avant le socle arrière.

Dans un mode de réalisation privilégié de l'invention, il est préférable que le câble d'alimentation en électricité soit constitué d'une pluralité de tresses indépendantes les unes des autres et réunies ensemble qu'à leurs extrémités. Ainsi, bien que la section totale du câble d'alimentation électrique soit plus importante que pour un faisceau traditionnel, la pluralité de tresses pouvant librement glisser les unes sur les autres est pratiquement aussi souple qu'une seule tresse. De surcroît, la conduite de retour d'eau a une section beaucoup plus faible puisqu'elle n'inclut plus le câble d'alimentation électrique. Cette conduite est donc elle aussi beaucoup plus souple que la conduite mixte retour d'eau / alimentation électrique. Il en résulte que, bien que contenant un câble d'alimentation électrique d'une section plus importante, le faisceau de l'invention est plus souple et flexible que les faisceaux de l'état de la technique, et ce, contrairement à ce que pensait l'homme du métier.

Par ailleurs, l'utilisation d'une pluralité de tresses permet une meilleure répartition à travers la section du faisceau. Cela permet une meilleure dissipation de la chaleur. La section totale du câble électrique peut donc être choisie inférieure à ce que l'homme du métier aurait choisi pour des tresses réunies dans un toron classique.

Il est particulièrement avantageux de combiner le câble d'alimentation électrique, le câble pour le transport du fil de soudage et la conduite de gaz en un seul sous-faisceau. Dans la pratique, on pourra utiliser comme sous-faisceau un faisceau pour relier un poste de soudage à un bec de cygne de type MIG refroidi à l'air. Il est ainsi possible d'utiliser les câbles coaxiaux habituellement utilisés pour les torches de type MIG refroidies à l'air. L'ensemble du faisceau étant introduit dans une gaine, on pourra supprimer l'isolant qui entoure ce câble coaxial et libérer ainsi les tresses du câble électrique, donnant au câble coaxial une plus grande flexibilité. Cette solution permet également d'utiliser des socles arrière habituellement utilisés pour ces torches refroidies à l'air. Cela permet de n'avoir en stock que des câbles coaxiaux et les socles arrière habituels.

Au niveau du bec de cygne de la torche, il est possible, lorsque ces câbles coaxiaux habituels (avec ou sans isolant) sont utilisés, de confondre en un seul raccord le raccord pour la conduite de gaz, l'entrée du fil de soudage et la prise pour le câble électrique. Dans ce cas, le raccord commun pour le gaz, le câble électrique et l'arrivée du fil de soudage est de préférence muni d'un filetage intérieur correspondant aux dimensions de l'extrémité d'un faisceau d'alimentation en gaz, électricité et fil de soudage pour torche MIG refroidie à l'air.

Conformément à l'invention, le bec de cygne dispose de préférence en outre d'un ou plusieurs raccords pour des fils électriques de commande de la torche.

L'invention est décrite plus en détail à l'aide des figures suivantes :
- Figure 1 :: vue en perspective d'un socle arrière selon l'état de la technique pour une torche MIG/MAG refroidie à l'eau ;
- Figure 2 :: vue en perspective du col de cygne d'une torche MIG/MAG refroidie à l'eau selon l'état de la technique ;
- Figure 3 :: une vue schématique d'un ensemble socle arrière / faisceau de l'état de la technique ;
- Figure 4 :: une vue schématique d'un ensemble socle arrière / faisceau selon l'invention ; et
- Figure 5 :: vue en perspective d'un col de cygne d'une torche MIG/MAG selon l'invention.

L'invention concerne un faisceau (110) servant à relier un poste de soudage à un bec de cygne de type MIG/MAG (130) refroidi à l'eau. Le faisceau (110) est raccordé au poste de soudage (non représenté) par un raccord appelé socle arrière (150). Le poste de soudage est associé à un réservoir d'eau (170) qui peut être placé à l'intérieur ou à l'extérieur du poste de soudage. Ce réservoir (170) peut être une unité à part.

Les faisceaux actuels (210) sont constitués d'une conduite d'alimentation en eau (211), d'une conduite d'alimentation en gaz (212), d'un câble servant à transporter le fil de soudage (213), d'un câble mixte (214) constitué d'une conduite pour le retour de l'eau dans laquelle se trouve une tresse pour le transport de l'électricité nécessaire au soudage. Ils comprennent en outre deux fils électriques (215, 216) pour la commande de la gâchette. L'ensemble est placé dans une gaine (219).

Du fait que le retour de l'eau et l'alimentation en électricité se font via un câble mixte (214), il est nécessaire de prévoir dans le socle arrière de l'état de la technique (250) une chambre de séparation (258) et un renvoi de l'eau vers le réservoir (270). Un socle arrière de l'état de la technique (250) comprend donc, outre les raccords (255, 256) pour les fils de commande (215, 216), quatre raccords principaux, à savoir un raccord (252) pour la conduite de gaz (212), un raccord (253) pour le câble de transport du fil de soudage (213), un raccord (254) pour le fil mixte (214) et un raccord (257) pour relier la chambre de séparation (258) à une conduite (217) ramenant l'eau au réservoir (270).

Le col de cygne (230) d'une torche de l'état de la technique est également muni d'une chambre de mélange pour introduire la tresse de l'alimentation électrique dans la conduite de retour de l'eau. Le bec de cygne de l'état de la technique comprend, outre les deux raccords (non représentés) pour les fils de commande (215, 216), un raccord (231) pour la conduite d'alimentation en eau (211), un raccord (232) pour la conduite d'alimentation en gaz (212), un raccord (233) pour le câble de transport du fil de soudage (213) et un raccord (234) pour le câble mixte (214).

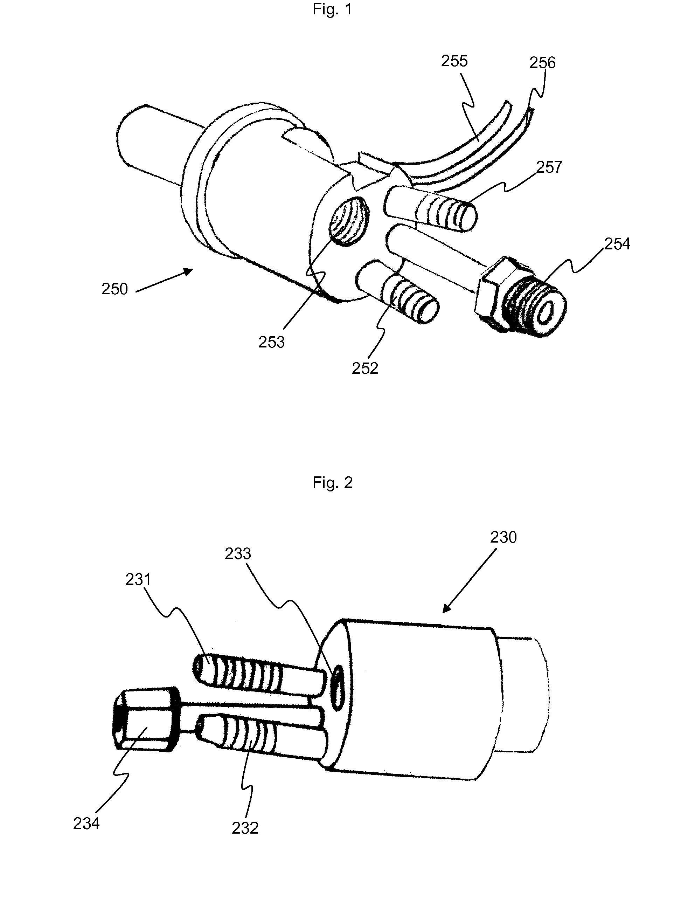

Les extrémités du câble mixte (214) sont constituées d'un côté par un écrou flottant, de l'autre par un filetage mâle qui sont vissés sur les raccords correspondants (254, 234) du socle arrière (250) et du col de cygne (230). Le câble de transport de fil (213) est muni à ses deux extrémités d'un filetage mâle qui sont vissés dans les raccords (233, 253) correspondants du socle arrière et du col de cygne. Les conduites d'eau et de gaz (211, 212, 217) sont fixées de façon traditionnelle par des colliers. Comme le montrent les figures 1 et 2, les raccords (234, 254) pour le câble mixte (214) sont très éloignés du socle arrière et du bec de cygne afin de faciliter la mise en place du câble mixte. Concrètement, cela signifie que le raccord (254) se trouve à proximité de l'extrémité de la poignée (non représentée) qui recouvre le bec de cygne (250). Or, des milliers de torsions se produisent sur le faisceau à la sortie de la poignée lors du maniement de la torche, lesquelles torsions conduisent à la détérioration du câble mixte (214) au niveau de raccord (254) et aux fuites d'eau évoquées précédemment.

Dans le faisceau (110) de l'invention, on a séparé l'alimentation électrique de la conduite de retour d'eau (114). Le faisceau de l'invention (110) comprend donc deux conduites d'eau (111, 114) séparées des autres constituants du faisceau. Tous les constituants du faisceau sont maintenus ensemble par une gaine (119).

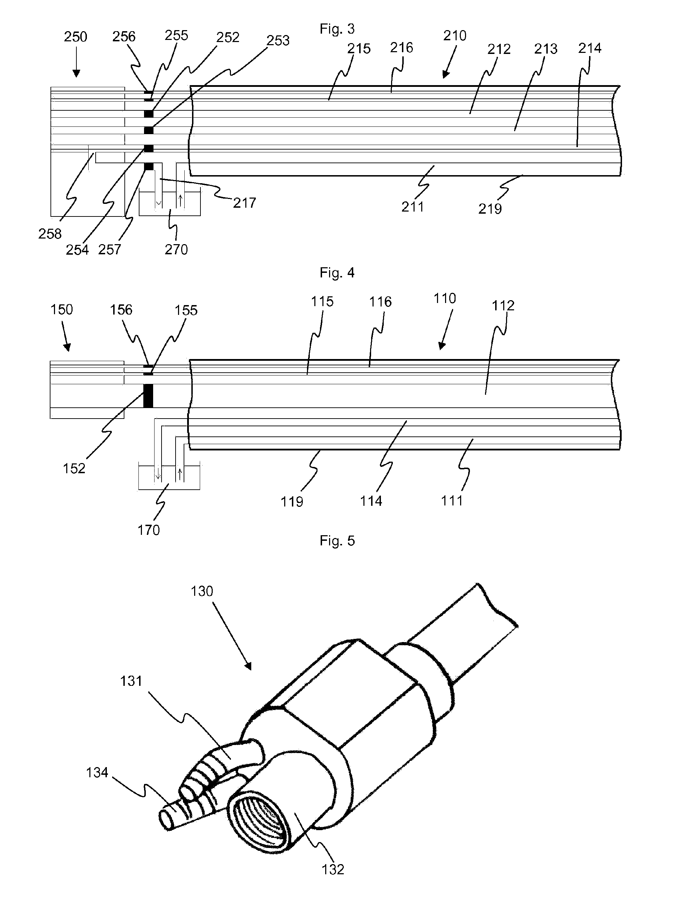

Du fait que les conduites d'eau sont séparées des autres constituants du faisceau, il est possible de leur faire quitter le faisceau avant le socle arrière (150) comme le montre la figure 4.

Dans un mode de réalisation privilégié de l'invention, le câble d'alimentation électrique (112) est constitué d'une pluralité de tresses indépendantes les unes des autres et placées côte à côte dans la gaine (119). Elles sont reliées ensemble à leurs extrémités, au niveau des raccords pour le socle arrière et le bec de cygne respectivement. Bien qu'ayant la même section qu'un câble en forme de toron, cette pluralité de tresses, indépendantes les unes des autres sur la longueur du faisceau, offre à ce dernier une très grande souplesse. Associées à une conduite de retour d'eau de diamètre plus faible, le faisceau de l'invention est plus souple que les faisceaux de l'état de la technique. Dans la pratique, pour un soudage à 400 Ampères, les faisceaux traditionnels sont munis d'une tresse de 16 à 20 mm². Pour un même ampérage, le faisceau de l'invention contient 7 tresses de 6 mm² de section.

Il peut être utile de réunir dans un câble commun (112) le câble d'alimentation électrique, le câble pour le transport du fil de soudage et la conduite pour les gaz. Ce câble commun peut être par exemple un câble coaxial connu pour le soudage de type MIG/MAG refroidi à l'air. Ce câble coaxial est muni d'un câble électrique cylindrique constitué d'une pluralité de tresses parallèles et indépendantes entourant une gaine étanche dans laquelle circulent le gaz et le fil de soudage. L'ensemble est entouré d'un isolant. Cependant, ce câble coaxial étant lui-même intégré dans la gaine (119), il est possible de renoncer à l'isolant et de gagner ainsi en flexibilité et en souplesse. Les deux extrémités de ce câble commun (112) sont munies d'un filetage mâle pouvant être vissé dans le raccord correspondant (132) sur le col de cygne (130) de la torche et sur le socle arrière (150). Le bec de cygne n'est donc plus muni, outre des raccords (non représentés) pour les fils de commande, que d'un raccord (131) pour la conduite d'alimentation en eau (111), un raccord (132) pour le câble coaxial (112) et un raccord (134) pour la conduite de retour d'eau (114). De même, le socle arrière (150) ne comprend plus que trois raccords, à savoir les deux raccords (155, 156) pour les fils de commande (115, 116) et le raccord (152) pour le câble coaxial (112). Dans la pratique, il est possible de recourir au socle arrière couramment utilisé pour les torches MIG/MAG refroidies à l'air.

Comme le montre la figure 5, les raccords (131, 134) pour les conduites d'eau (111, 114) sont maintenant situés très près du col de cygne (130). Ces raccords se trouvent assez loin des torsions qui ont lieu à la sortie de la poignée. Il est donc peu probable que l'une des conduites soit endommagée suite aux milliers de torsions que subit le faisceau à l'extrémité de la poignée. Le risque de fuite est donc pratiquement exclu.

Si cependant, pour une raison quelconque, l'une des conduites doit être remplacée, il est très facile de l'enlever du raccord (131, 134) sur lequel la conduite est fixée par un simple collier. Il n'est plus nécessaire de démonter la gaine, il suffit de tirer sur la conduite endommagée et d'introduire la conduite de rechange. Alors qu'il fallait plus d'une heure et demie pour remplacer un câble mixte dans les faisceaux de l'état de la technique, il ne faut dorénavant pas plus de trois minutes avec le faisceau de l'invention.

Des tests ont été réalisés avec deux torches du commerce munies chacune d'un faisceau traditionnel avec un câble mixte retour d'eau / alimentation électrique et avec une torche de l'invention munie d'un faisceau de l'invention. Une panne a été simulée en débranchant l'alimentation en eau.

Avec les torches de l'état de la technique, on a constaté après environ 3 minutes de soudage une destruction du col de cygne et un endommagement important des constituants du faisceau. Le câble mixte retour d'eau / électricité notamment présentait suite à la surchauffe des fuites d'eau de sorte qu'il n'était plus utilisable et devait être remplacé. Le col de cygne n'était plus utilisable.

Avec la torche de l'invention, aucun dysfonctionnement n'a été observé au bout de 3 minutes de soudage. Ce n'est qu'après 10 minutes de soudage que l'opérateur a ressenti un échauffement anormal de la poignée. En rebranchant l'arrivée d'eau, il a été possible de continuer à souder sans qu'aucune fuite dans le faisceau ait été à déplorer.

Cela s'explique par le fait que le bec de cygne est raccordé, comme une torche refroidie à l'air, à un câble électrique de section assez importante. La torche de l'invention peut donc être utilisée aussi bien refroidie à l'eau que refroidie à l'air, alors que dans l'état de la technique, on dispose soit de torches refroidies à l'eau soit de torches refroidies à l'air, les torches refroidies à l'eau ne fonctionnant pas à l'air et inversement.

Il va de soi que l'invention peut être mise en oeuvre sans faire appel à un câble coaxial. Il est tout à fait possible de recourir à un câble de transport du fil de soudage, une conduite de gaz et un câble électrique, ou toute combinaison de deux de ces trois éléments. L'intérêt du câble coaxial réside dans le fait que la tresse électrique est refroidie par le gaz circulant à l'intérieur. De plus, il est connu pour sa résistance. Le gaz et le fil de soudage arrivant ensemble, il n'est plus nécessaire, au niveau du bec de cygne, de prévoir une chambre de mélange comme c'est le cas dans les torches de l'état de la technique. Enfin, le fait de faire appel à un câble et à un socle arrière couramment utilisés pour d'autres types de torches permet de simplifier la gestion des stocks.

Dans l'état de la technique, selon les besoins, il faut utiliser deux torches différentes, à savoir une torche refroidie à l'air et une torche refroidie à l'eau. Or, chacune de ces deux torches a ses propres pièces détachées. Au contraire, avec le faisceau et le bec de cygne de l'invention, on n'utilise plus qu'un seul modèle de faisceau et de bec de cygne pour souder avec un refroidissement à l'air ou avec un refroidissement à l'eau et le stock de pièces détachées en est diminué d'autant.

Un avantage supplémentaire du faisceau conforme à l'invention muni d'un câble commun muni à chaque extrémité d'un filetage mâle réside dans le fait qu'il est symétrique et donc réversible. En cas d'usure de fatigue suite aux milliers de torsions et flexions subies par le câble d'alimentation et des câbles d'aller et de retour d'eau, il suffit simplement d'utiliser la réversibilité du câble d'alimentation et des tuyaux d'eau, et d'utiliser la partie arrière du faisceau en la montant sur le bec de cygne ce qui permet d'avoir un faisceau neuf sur l'avant, étant donné qu'il n'a subi aucune torsion ni de flexion sur l'arrière. Les conduites d'eau, qui sortent du faisceau côté réservoir, sont tirées à l'intérieur du faisceau par leur extrémité située initialement du côté du bec de cygne pour les faire dépasser du côté usé. Ces nouvelles extrémités sont rebranchées sur le réservoir tandis que les anciennes extrémités du réservoir se trouvent au niveau des autres raccords et sont raccordées au bec de cygne. Le cas échéant, les extrémités usées des conduites et du câble d'alimentation sont raccourcies. Cette réversibilité permet de doubler la durée de vie du faisceau de l'invention, qui elle-même est plusieurs fois supérieure à celle des faisceaux de l'état de la technique. Cette réversibilité n'est pas possible avec les faisceaux de l'état de la technique.

Avec le faisceau de l'invention, on supprime le câble eau / courant, source majeure de fuites d'eau. En cas de dysfonctionnement de la circulation d'eau, notamment lorsque le soudeur oublie de vérifier le niveau d'eau avant de souder, il n'y a plus de destruction des composants du faisceau ou du bec de cygne. De plus, la simplicité des raccords permet un remplacement rapide des éléments du faisceau en cas de besoin. Cette rapidité rend à nouveau plus rentable de réparer le faisceau que de jeter l'ensemble faisceau et bec de cygne, comme c'est le cas avec les torches de l'état de la technique. Enfin, choisissant un câble commun de type câble coaxial pour soudage de type MIG/MAG sans isolant, on obtient un faisceau plus souple que celui de l'état de la technique.

Références
- 110: Faisceau de l'invention
- 111 1: Conduite d'alimentation en eau
- 112: Câble coaxial (conduite d'alimentation en gaz, fil de soudage, câble électrique)
- 114: Conduite de retour d'eau
- 115: Fil de commande
- 116: Fil de commande
- 119: Gaine
- 130: Col de cygne
- 131: Raccord arrivée d'eau
- 132: Raccord câble coaxial

- 210: Faisceau de l'état de la technique
- 211: Conduite d'alimentation en eau
- 212: Conduite de gaz
- 213: Câble transport du fil de soudage
- 214: Câble mixte (retour d'eau / électricité)
- 215: Fil de commande
- 216: Fil de commande
- 217: Conduite de retour d'eau
- 219: Gaine
- 230: Col de cygne
- 231: Raccord arrivée d'eau
- 232: Raccord arrivée de gaz (gaz, électricité, fil soudage)
- 134: Raccord retour d'eau
- 150: Socle arrière
- 152: Raccord câble coaxial (gaz, électricité, fil soudage)
- 155: Raccord fil de commande
- 156: Raccord fil de commande
- 170: Réservoir d'eau

- 233: Raccord fil de soudage
- 234: Raccord mixte (retour d'eau / électricité)
- 250: Socle arrière
- 252: Raccord gaz
- 253: Raccord fil soudage
- 254: Raccord mixte (retour d'eau / électricité)
- 255: Raccord fil de commande
- 256: Raccord fil de commande
- 258: Chambre de séparation

## Revendications

1. Faisceau (110) pour relier un poste de soudage associé à un réservoir d'eau (170) et un bec de cygne (130) pour soudage de type MIG ou MAG à refroidissement à l'eau, lequel faisceau (110) comprend une conduite d'alimentation en eau (111), une conduite de retour d'eau (114), un câble d'alimentation électrique (112), un câble (112) pour le transport du fil de soudage et une conduite pour le gaz (112), **caractérisé en ce que** la conduite d'alimentation en eau (111) et la conduite de retour d'eau (114) sont séparées du câble d'alimentation en électricité (112), du câble pour le transport du fil de soudage (112) et de la conduite pour le gaz (112).

2. Faisceau (110) selon la revendication 1, **caractérisé en ce que** le faisceau comprend en outre deux fils électriques (115, 116) pour la commande de la torche (130).

3. Faisceau (110) selon l'une des revendications précédentes, **caractérisé en ce que** tous les éléments constituant le faisceau sont placés à l'intérieur d'une gaine (119) qui les recouvre sur une partie au moins de la longueur du faisceau.

4. Faisceau (110) selon l'une des revendications précédentes, **caractérisé en ce que** le câble d'alimentation en électricité (112) est constitué d'une pluralité de tresse.

5. Faisceau (110) selon l'une des revendications précédentes, **caractérisé en ce que** le câble d'alimentation électrique, le câble pour le transport du fil de soudage et la conduite de gaz sont réunis dans un même sous-faisceau (112).

6. Faisceau (110) selon la revendication précédente, **caractérisé en ce que** le sous-faisceau (112) est un faisceau pour relier un poste de soudage à un bec de cygne de type MIG ou MAG refroidi à l'air.

7. Faisceau (110) selon la revendication précédente, **caractérisé en ce que** l'isolant du sous-faisceau (112) pour torche de type MIG ou MAG refroidie à l'air est enlevé.

8. Bec de cygne (130) de type MIG ou MAG refroidi à l'eau pour un faisceau selon l'une des revendications précédentes, **caractérisée en ce qu'**il comprend un raccord pour la conduite d'arrivée d'eau (131), un raccord pour la conduite de retour d'eau (134), un raccord pour la conduite de gaz (132), un raccord pour le câble de transport du fil de soudage (132) et un raccord pour le câble électrique (132), les raccords pour les conduites d'eau (131, 134) étant distincts du raccord pour la conduite de gaz (132), du raccord pour le câble de transport du fil de soudage (132) et du raccord pour le câble électrique (132).

9. Bec de cygne (130) selon la revendication précédente, **caractérisée en ce que** le raccord pour la conduite de gaz, le raccord pour le câble de transport du fil de soudage et le raccord pour le câble électrique sont confondus en un seul raccord (132).

10. Bec de cygne (130) selon la revendication précédente, **caractérisée en ce que** le raccord commun (132) pour le gaz, le câble électrique et le fil de soudage est muni d'un filetage intérieur correspondant aux dimensions de l'extrémité d'un faisceau d'alimentation en gaz, électricité et fil de soudage pour torche MIG refroidie à l'air.

11. Bec de cygne (130) selon l'une des revendications 8 à 10, **caractérisée en ce qu'**elle comprend en outre un ou plusieurs raccords pour des fils électriques de commande de la torche.
